# EUROPEAN PATENT APPLICATION

(11) **EP 4 113 665 A1**
(43) Date of publication of application: **04.01.2023**
(21) Application number: 21760826.4
(22) Date of filing: 18.02.2021
(51) Int. Cl.: H01M 4/505, H01M 4/525, H01M 10/052, H01M 10/0566, H01M 10/38, H01M 10/44

(54) **CHARGE AND DISCHARGE METHOD FOR NONAQUEOUS ELECTROLYTE SECONDARY BATTERY, AND CHARGE AND DISCHARGE SYSTEM FOR NONAQUEOUS ELECTROLYTE SECONDARY BATTERY**

(30) Priority: 28.02.2020 JP 2020034464
(71) Applicant: Panasonic Intellectual Property Management Co., Ltd., Osaka-shi, Osaka 540-6207 (JP)
(72) Inventor: FUKUOKA Takahiro, Osaka-shi, Osaka 540-6207 (JP); KANO Akira, Osaka-shi, Osaka 540-6207 (JP)
(74) Representative: Novagraaf International SA
(86) International application number: PCT/JP2021/006229
(87) International publication number: WO 2021/172175

(57) **Abstract**

A charging and discharging method for a non-aqueous electrolyte secondary battery. The battery includes a positive electrode, a negative electrode including a negative electrode current collector, and a non-aqueous electrolyte, in which a lithium metal deposits on the negative electrode during charge, and the lithium metal dissolves in the non-aqueous electrolyte during discharge. The method includes a charging step, and a discharging step performed after the charging step. The charging step includes a first step of performing a constant-current charging at a first current I₁ having a current density of 1.0 mA/cm² or less, and a second step of performing a constant-current charging at a second current I₂ larger that the first current I₁, after the first step. In the discharging step, an amount of electricity corresponding to 20% or more and 80% or less of a full charge amount is discharged.

## Description

### [Technical Field]

The present invention relates to a charging and discharging method and a charging and discharging system for a non-aqueous electrolyte secondary battery.

### [Background Art]

Non-aqueous electrolyte secondary batteries represented by lithium-ion secondary batteries have high energy density and high output, and have been seen as promising power sources for mobile devices such as smartphones, driving power sources for vehicles such as electric cars, and power storage apparatus for storing natural energy such as solar energy.

With an aim to achieve a higher battery capacity, studies have been made on a non-aqueous electrolyte secondary battery of a type in which a lithium metal deposits on a negative electrode current collector during charge and the lithium metal dissolves during discharge (e.g., Patent Literature 1).

### [Citation List]

### [Patent Literature]

[Patent Literature 1] Japanese Laid-Open Patent Publication No. 2001-243957

### [Summary of Invention]

### [Technical Problem]

However, the deposition form of the lithium metal is difficult to control, and the suppression of dendrite formation and growth has been insufficient. The lithium metal deposited in the form of dendrites on the negative electrode current collector during charge starts to dissolve from the negative electrode current collector side during discharge. Therefore, part of the deposited lithium metal tends to become isolated from the negative electrode (conductive network) during discharge. With repeated charge and discharge, the isolation of lithium metal from the negative electrode proceeds, and the cycle characteristics tend to deteriorate.

### [Solution to Problem]

In view of the above, one aspect of the present invention relates to a charging and discharging method for a non-aqueous electrolyte secondary battery, the battery including a positive electrode, a negative electrode including a negative electrode current collector, and a non-aqueous electrolyte, in which a lithium metal deposits on the negative electrode during charge, and the lithium metal dissolves in the non-aqueous electrolyte during discharge, the method including: a charging step; and a discharging step performed after the charging step, wherein the charging step includes a first step of performing a constant-current charging at a first current I₁ having a current density of 1.0 mA/cm² or less, and a second step of performing a constant-current charging at a second current I₂ larger that the first current I₁, after the first step, and in the discharging step, an amount of electricity corresponding to 20% or more and 80% or less of a full charge amount is discharged.

Another aspect of the present invention relates to a charging and discharging system for a non-aqueous electrolyte secondary battery, including: a non-aqueous electrolyte secondary battery; and a charging and discharging apparatus, wherein the non-aqueous electrolyte secondary battery includes a positive electrode, a negative electrode including a negative electrode current collector, and a non-aqueous electrolyte, in which a lithium metal deposits on the negative electrode during charge, and the lithium metal dissolves in the non-aqueous electrolyte during discharge, and the charging and discharging apparatus includes a charging control unit, and a discharging control unit, the charging control unit controls charging such that a first constant-current charging is performed at a first current I₁ having a current density of 1.0 mA/cm² or less, and a second constant-current charging is performed after the first constant-current charging, at a second current I₂ being larger than the first current I₁, and the discharging control unit controls discharging such that an amount of electricity corresponding to 20% or more and 80% or less of a full charge amount is discharged.

### [Advantageous Effects of Invention]

According to the present invention, the cycle characteristics of the non-aqueous electrolyte secondary battery can be enhanced.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] A scanning electron microscope (SEM) image of a negative electrode during constant-current charging of a non-aqueous electrolyte secondary battery. FIG. 1A shows a deposited state of lithium metal on the negative electrode current collector when a charge rate is 50%, in the case of a charge current value being 0.05 C. FIG. 1B shows a deposited state of lithium metal on the negative electrode current collector when the charge rate is 50%, in the case of the charge current value being 0.2 C.
[FIG. 2] A schematic block diagram of a charging and discharging system for a non-aqueous electrolyte secondary battery according to one embodiment of the present invention.
[FIG. 3] A partially cut-away schematic oblique view of a non-aqueous electrolyte secondary battery used in the charging and discharging method and the charging and discharging system according to one embodiment of the present invention.

### [Description of Embodiments]

### [Charging and discharging method for non-aqueous electrolyte secondary battery]

The charging and discharging method for a non-aqueous electrolyte secondary battery according to one embodiment of the present invention relates to a charging and discharging method for a non-aqueous electrolyte secondary battery including a positive electrode, a negative electrode including a negative electrode current collector, and a non-aqueous electrolyte, in which a lithium metal deposits on the negative electrode during charge, and the lithium metal dissolves in the non-aqueous electrolyte during discharge. The above charging and discharging method includes a charging step, and a discharging step performed after the charging step. The charging step includes a first step of performing a constant-current charging at a first current I₁ having a current density of 1.0 mA/cm² or less, and a second step of performing a constant-current charging at a second current I₂ larger that the first current I₁, after the first step. In the discharging step, an amount of electricity corresponding to 20% or more and 80% or less of a full charge amount is discharged. That is, discharging is performed until a later-described discharge rate becomes 20%, and 80% or less.

The current density (mA/cm²) is a current density per unit facing area (1 cm²) between the positive electrode and the negative electrode, and is determined by dividing the current value applied to the battery, by the total area of a positive electrode mixture layer(s) (or a positive electrode active material layer(s)) facing the negative electrode (hereinafter sometimes referred to as an effective total area of the positive electrode). The effective total area of the positive electrode is, for example, when the positive electrode has a positive electrode mixture layer on both sides of the positive electrode current collector, a total area of the positive electrode mixture layers on both sides (i.e., a sum of the projected areas of the positive electrode mixture layers on both sides, as projected on one and the other surfaces of the positive electrode current collector, respectively).

Usually, the battery is fully charged by the charging step. A fully charged battery means a battery charged to a voltage (e.g., 4.1 V) at which the amount of electricity corresponding to the rated capacity is estimated to have been charged. A full charge amount means an amount of electricity charged in a battery from a fully discharged state to the fully charged state. A fully discharged battery means a battery discharged to a voltage (e.g., 3 V) at which the amount of electricity corresponding to the rated capacity is estimated to have been discharged. Hereinafter, a ratio of the amount of charged electricity to the full charge amount is referred to as a charge rate. A ratio of the amount of discharged electricity to the full charge amount is referred to as a discharge rate. In the fully charged state, the charge rate is 100%. In the fully discharged state, the discharge rate is 100%.

When the above charging step and discharging step are performed, the isolation of lithium metal from the negative electrode during discharge can be suppressed, and the reduction in capacity due to the above isolation can be suppressed. The deterioration in cycle characteristics due to the progress of the isolation with repeated charge and discharge can be suppressed.

In the first step (early stage of charging), the current density in the first current I₁ is as small as 1.0 mA/cm² or less, and lithium metal tends to deposit in a massive form (particulate form) on the negative electrode current collector. The massive Li is unlikely to be isolated during discharge. In the second step, the charge rate may be set higher than in the first step, so that the charge time can be shortened. In the second step, a dendritic lithium metal deposits to some extent. The dendritic lithium metal, however, deposits on the massive Li deposited in the early stage of charging (mainly in the first step) and tends to be firmly integrated with the massive Li, and the isolation of Li is suppressed during discharge. The first current I₁ may be 0.1 C or less.

When an amount of electricity corresponding to 20% or more and 80% or less of the full charge amount is discharged, the massive Li tends to remain on the surface of the negative electrode current collector at the end of the discharging step. This allows the massive Li with good quality to continue to remain on the negative electrode current collector through charge and discharge, so that lithium metal deposits reliably on the massive Li with good quality during charge. The deposited lithium metal becomes firmly integrated with the massive Li, and the isolation of Li during discharge can be suppressed. The discharge rate at the end of the discharging step may be 50% or more and 80% or less, and may be 50% or more and 75% or less.

Here, (1/X) C represents a current value used when the amount of electricity corresponding to the rated capacity is constant-current charged or discharged in X hour(s). For example, 0.1 C is a current value used when the amount of electricity corresponding to the rated capacity is constant-current charged or discharged in 10 hours.

### (Charging step)

In the first step, an amount of electricity corresponding to 5% or more and 15% or less of the total amount of electricity to be charged in the charging step (the amount of total electricity to be charged in the charging step) may be charged. In this case, massive Li is likely to be allowed to deposit sufficiently. Also, in this case, by combining with a discharging step of discharging until the discharge rate becomes 20% or more and 80% or less, a sufficient amount of massive Li with good quality tends to be maintained on the negative electrode current collector throughout the charge and discharge. For example, when the charging-discharging step does not include a later-described preliminary charging step, an amount of electricity corresponding to the full charge amount may be charged in the first-time charging step, and the total amount of electricity to be charged in the above charging step may be the full charge amount.

The charging step may include a third step of performing a constant-current charging at a third current I₃ after the second step. When the first to third steps of constant-current charging are performed, a current density J₂ in the second current I₂ may be larger than a current density J₁ in the first current I₁, and 4.0 mA/cm² or less, and a current density J₃ in the third current I₃ may be larger than the current density J₂ in the second current I₂, and 4.0 mA/cm² or more. The second current I₂ may be larger than the first current I₁, and 0.4 C or less, and the third current I₃ may be larger than the second current I₂, and 0.4 C or more. When the charging step includes the first step to the third step, and the first current to the third current are appropriately set, the cycle characteristics are likely to be improved.

By providing the third step and decreasing the current density J₂ to 4.0 mA/cm² or less, the dendrite formation and growth in the second step can be suppressed. Also in the second step, depending on the magnitude of the charge current (e.g., when the current density J₂ is 2.0 mA/cm² or less), massive Li may deposit in some cases. By increasing the current value in the order of the second step to the third step, charging can be done efficiently in a short time. When the current density J₃ is 4.0 mA/cm² or more, the charge time tends to be shortened, while excellent cycle characteristics are maintained.

The current density J₁ in the first current I₁ may be, for example, 0.1 mA/cm² or more and 0.8 mA/cm² or less, and may be 0.1 mA/cm² or more and 0.5 mA/cm² or less. The current density J₂ in the second current I₂ may be, for example, 1.0 mA/cm² or more and 2.0 mA/cm² or less. The current density J₃ in the third current I₃ may be, for example, 8.0 mA/cm² or more and 10.0 mA/cm² or less.

The first current I₁ may be, for example, 0.01 C or more and 0.08 C or less, and may be 0.01 C or more and 0.05 C or less. The second current I₂ may be, for example, 0.1 C or more and 0.2 C or less. The third current I₃ may be 0.8 C or more and 1.0 C or less.

In view of performing three-step constant current charging efficiently in a balanced manner, the ratio I₂/I₁ of the second current I₂ to the first current I₁ may be, for example, 1.25 or more, and may be 1.25 or more and 4 or less. Likewise, the ratio I₃/I₂ of the third current I₃ to the second current I₂ may be, for example, 3 or more, and may be 3 or more and 10 or less.

The timing of ending each step of the constant-current charging may be controlled, for example, by the charge time, the amount of charged electricity, or the voltage. The timing may be controlled by the ratio of the amount of charged electricity to the total amount of electricity to be charged in the charging step, or by the charge rate. The amount of charged electricity (charge rate) may be estimated from the voltage. An amount of charged electricity (charge rate) may be estimated from the voltage, based on the relationship between the amount of charged electricity and the voltage when an initial battery is constant-current charged to the rated capacity (charge rate: 100%), and an end-of-charge voltage in each step may be set. For example, the end-of-charge voltage in the final step of the constant-current charging may be set to a voltage at which the amount of electricity corresponding to the rated capacity is estimated to have been charged, based on the relationship between the amount of charged electricity and the voltage when an initial battery is constant-current charged to the rated capacity.

In the first step, the constant-current charging may be performed such that the amount of charged electricity in the first step becomes 15% or less of the total amount of electricity to be charged in the charging step. When the constant-current charging includes the first to third steps, in the second step, the constant-current charging may be performed such that the summed amount of charged electricity in the first step and the second step becomes 50% or less of the total amount of electricity to be charged in the charging step. In this case, the first step to the third step can be performed in a well-balanced manner, and the cycle characteristics can be effectively improved.

In order to perform charging more reliably, the above charging method may further include a constant-voltage charging step of performing charging at a constant voltage after the constant-current charging step. The constant-voltage charging is performed, for example, until the current reaches a predetermined value (e.g., 0.02 C). For example, when the final step of the constant-current charging is performed until a predetermined voltage (e.g., 4.1 V) is reached, the constant-voltage charging may be performed at that voltage.

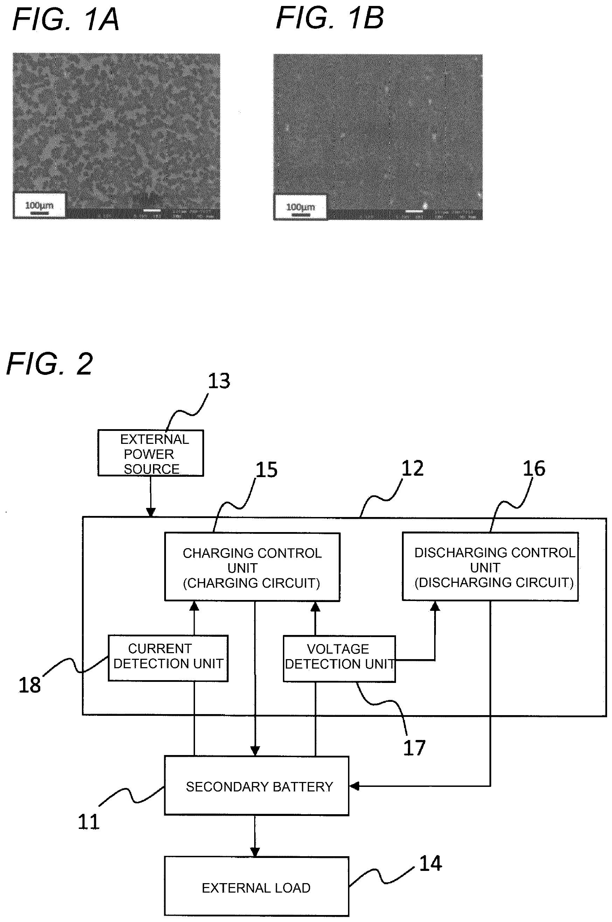

Here, FIG. 1 is a SEM image of a negative electrode during constant-current charging of a non-aqueous electrolyte secondary battery. FIG. 1A shows a deposited states of lithium metal on the negative electrode current collector when the charge rate is 50%, in the case of the charge current value being 0.05 C (0.5 mA/cm²). FIG. 1B shows a deposited state of lithium metal on the negative electrode current collector when the charge rate is 50%, in the case of the charge current value being 0.2 C (2.0 mA/cm²).

In the negative electrode of FIG. 1A, the charge current density is as small as 0.5 mA/cm², and massive lithium metal is abundantly deposited on the negative electrode current collector. On the other hand, in the negative electrode of FIG. 1B, the charge current density is as large as 2.0 mA/cm², and dendritic lithium metal is abundantly deposited on the negative electrode current collector.

### (Discharging step)

In the discharging step, an amount of electricity corresponding to 20% or more and 80% or less of the full charge amount is discharged. The discharging may be a constant-current discharging or a constant-power discharging. The timing of ending the discharging step may be controlled by, for example, the amount of electricity discharged (discharge rate) or the voltage. The amount of electricity discharged (discharge rate) may be estimated from the voltage. In a constant-current discharging, an end-of-discharge voltage may be set by estimating the amount of electricity discharged (discharge rate) from the voltage, based on the relationship between the amount of discharged electricity and the voltage when an initial battery in the fully charged state is constant-current discharged by an amount corresponding to the rated capacity (discharge rate: 100%). When discharging to a discharge rate of 20% or more and 80% or less, the end-of-discharge voltage is set to, for example, 3.5 V or more and 3.8 V or less. The discharge current density in the discharging step is, for example, 2.0 mA/cm² or more and 20.0 mA/cm² or less. The discharge current value in the discharging step is, for example, 0.2 C or more and 2 C or less.

### (Preliminary charging step)

The above charging and discharging method may further include a preliminary charging step of performing a constant-current charging at a current I₀ having a current density of 0.5 mA/cm² or less, before the charging step performed first time. By performing the preliminary charging step, massive Li with good quality can be abundantly formed on the negative electrode current collector, as in the negative electrode of the SEM image of FIG. 1A. The current I₀ is, for example, 0.05 C or less.

In view of forming massive Li with good quality, the current density J₀ in the current I₀ may be 0.1 mA/cm² or more and 0.5 mA/cm² or less, and may be 0.2 mA/cm² or more and 0.5 mA/cm² or less. In view of forming massive Li with good quality, the current I₀ may be 0.01 C or more and 0.05 C or less, and may be 0.02 C or more and 0.05 C or less.

When performing a preliminary discharging step as described below, a negative electrode whose charge rate is 100% may be obtained by charging an amount of electricity corresponding to the rated capacity in the preliminary charging step. When not performing a preliminary discharging step as described below, for example, a negative electrode whose charge rate is 80% or more and 100% or less may be obtained in the preliminary charging step.

### (Preliminary discharging step)

The above charging and discharging method may further include, after the preliminary charging step and before the aforementioned charging step performed first time, a preliminary discharging step of performing discharging such that the lithium metal deposited during charge of the preliminary charging step partially continues to remain. The discharging may be a constant-current charging or a constant-power discharging. By performing the preliminary discharging step, massive Li with better quality can be efficiently allowed to continue to remain on the negative electrode current collector.

For example, after charging to the charge rate 100% by the preliminary charging step, a discharging by the preliminary discharging step may be performed to the discharge rate of 20% or more and 80% or less. In this case, the end-of-discharge voltage is set to, for example, 3.5 V or more and 3.8 V or less. The discharge current density in the preliminary discharging step is, for example, 2.0 mA/cm² or more and 20.0 mA/cm² or less. The discharge current value in the preliminary discharging step is, for example, 0.2 C or more and 2 C or less.

### [Charging and discharging system for non-aqueous electrolyte secondary battery]

A charging and discharging system for a non-aqueous electrolyte secondary battery according to one embodiment of the present invention includes a non-aqueous electrolyte secondary battery, and a charging and discharging apparatus. The non-aqueous electrolyte secondary battery includes a positive electrode, a negative electrode including a negative electrode current collector, and a non-aqueous electrolyte, in which a lithium metal deposits on the negative electrode during charge, and the lithium metal dissolves in the non-aqueous electrolyte during discharge. The charging and discharging apparatus includes a charging control unit, and a discharging control unit. The charging control unit controls charging such that a first constant-current charging is performed at a first current I₁ having a current density of 1.0 mA/cm² or less, and a second constant-current charging is performed after the first constant-current charging, at a second current I₂ being larger than the first current I₁. The discharging control unit controls discharging such that an amount of electricity corresponding to 20% or more and 80% or less of a full charge amount is discharged. In the first constant-current charging, an amount of electricity corresponding to 5% or more and 15% or less of the full charge amount may be charged. The first current I₁ may be 0.1 C or less.

The charging control unit may control charging such that a third constant-current charging is performed at a third current I₃ after the second constant-current charging. In this case, a current density J₂ in the second current I₂ may be larger than a current density J₁ in the first current I₁, and 4.0 mA/cm² or less. A current density J₃ in the third current I₃ may be larger than the current density J₂, and 4.0 mA/cm² or more. The second current I₂ may be larger than the first current I₁, and 0.4 C or less. The third current I₃ may be larger than the second current I₂, and 0.4 C or more.

The charging control unit may control charging such that when the amount of charged electricity reaches a first threshold value in the first constant-current charging, the first constant-current charging is ended to start the second constant-current charging, and when the amount of charged electricity reaches a second threshold value in the second constant-current charging, the second constant-current charging is ended to start the third constant-current charging The first threshold value may be an amount of charged electricity corresponding to 15% or less of a total amount of electricity to be charged. The second threshold value may be an amount of charged electricity corresponding to 50% or less of the total amount of electricity to be charged.

FIG. 2 illustrates an example of a charging and discharging system according to an embodiment of the present invention.

The charging and discharging system includes a non-aqueous electrolyte secondary battery 11, and a charging and discharging apparatus 12. To the charging and discharging apparatus 12, an external power source 13 that supplies power to the charging and discharging apparatus 12 is connected. To the non-aqueous electrolyte secondary battery 11, an external load 14 is connected. The non-aqueous electrolyte secondary battery 11 includes a positive electrode, a negative electrode including a negative electrode current collector, and a non-aqueous electrolyte, in which a lithium metal deposits on the negative electrode during charge, and the lithium metal dissolves in the non-aqueous electrolyte during discharge. The charging and discharging apparatus 12 includes a charging control unit 15 including a charging circuit, and a discharging control unit 16 including a discharging circuit.

The charging control unit 15 controls charging such that a first constant-current charging is performed at a first current I₁ having a current density of 1.0 mA/cm² or less, and a second constant-current charging is performed after the first constant-current charging, at a second current I₂ being larger than the first current I₁. In the first constant-current charging, an amount of electricity corresponding to 5% or more and 15% or less of the total amount of electricity to be charged is charged.

The charging and discharging apparatus 12 includes a voltage detection unit 17 that detects a voltage of the non-aqueous electrolyte secondary battery 11. The voltage detection unit 17 may include an arithmetic unit that calculates an amount of charged electricity (charge rate), based on the voltage. Based on the voltage detected by the voltage detection unit 17 (the amount of charged electricity determined by the arithmetic unit), by the charging control unit 15, the first constant-current charging is switched to the second constant-current charging, and the second constant-current charging is ended.

The charging control unit 15 controls such that a constant-voltage charging is performed after the second constant-current charging, at a predetermined voltage (e.g., an end-of-charge voltage of the second constant-current charging). The charging and discharging apparatus 12 includes a current detection unit 18 that detects a current. The charging control unit 15 may control such that the constant-voltage charging is ended when the current detected by the current detection unit 18 reaches a threshold value.

In FIG. 2, the timings of ending of the first constant-current charging and the second constant-current charging are controlled by the voltage detected by the voltage detection unit 17, but may be controlled by the charge time. For example, the ending of the first constant-current charging may be controlled by the charge time, and the ending of the second constant-current charging may be controlled by the voltage.

The discharging control unit 16 controls discharging such that an amount of electricity corresponding to 20% or more and 80% or less of the full charge amount is discharged (constant-current discharged or constant-power discharged). The voltage detection unit 17 may include an arithmetic unit that calculates an amount of discharged electricity (discharge rate) based on the voltage. The discharging control unit 16 controls discharging such that the discharging is ended when the voltage detected by the voltage detection unit 17 (the amount of discharged electricity (discharge rate) determined by the arithmetic unit) reaches a threshold value.

The charging control unit 15 may control charging such that a constant current-charging (preliminary charging) is performed at a current I₀ having a current density of 0.5 mA/cm² or less, before the first constant-current charging performed first time. The discharging control unit 16 may control discharging such that, after the preliminary charging and before the first constant-current charging performed first time, a discharging (preliminary discharging) is performed such that the lithium metal deposited during charge of the preliminary charging step partially continues to remain.

A detailed description will be given below of each component element of the non-aqueous electrolyte secondary battery.

### [Negative electrode]

The negative electrode includes a negative electrode current collector. In a lithium secondary battery, a lithium metal deposits, for example, on a surface of the negative electrode current collector during charge. Specifically, lithium ions contained in the non-aqueous electrolyte receive electrons on the negative electrode current collector during charge and become a lithium metal, which deposits on the surface of the negative electrode current collector. The lithium metal deposited on the surface of the negative electrode current collector dissolves as lithium ions during discharge in the non-aqueous electrolyte. The lithium ions contained in the non-aqueous electrolyte may be either derived from a lithium salt added to the non-aqueous electrolyte or supplied from the positive electrode active material during charge, or both.

The negative electrode current collector is an electrically conductive sheet. The conductive sheet may be in the form of a foil, film, and the like. The negative electrode current collector may have any thickness; the thickness is, for example, 5 µm or more and 300 µm or less.

The conductive sheet may have a smooth surface. In this case, during charge, the lithium metal derived from the positive electrode tends to uniformly deposit on the conductive sheet. The smooth surface means that the conductive sheet has a maximum height roughness Rz of 20 µm or less. The conductive sheet may have a maximum height roughness Rz of 10 µm or less. The maximum height roughness Rz is measured in accordance with JIS B 0601: 2013.

The negative electrode current collector (conductive sheet) is made of an electrically conductive material other than lithium metal and lithium alloys. The conductive material may be a metal material, such as a metal and an alloy. The conductive material is preferably not reactive with lithium. Specifically, a material that forms neither an alloy nor an intermetallic compound with lithium is preferred. Such a conductive material is exemplified by copper (Cu), nickel (Ni), iron (Fe), and an alloy of one or more of these metal elements, or graphite having a basal plane predominately exposed on its surface. Examples of the alloy include a copper alloy and stainless steel (SUS). Preferred are copper and/or a copper alloy because of its high electrical conductivity.

### [Positive electrode]

The positive electrode includes a positive electrode active material capable of absorbing and releasing lithium ions. The positive electrode active material is, for example, a composite oxide containing lithium and a metal Me other than lithium. The metal Me includes at least a transition metal. The composite oxide is inexpensive in production cost and advantageous in its high average discharge voltage.

The lithium contained in the composite oxide is released as lithium ions from the positive electrode during charge, and deposits as a lithium metal at the negative electrode. During discharge, the lithium metal dissolves from the negative electrode and releases lithium ions, which are absorbed in the composite oxide in the positive electrode. That is, the lithium ions involved in charging and discharging are mostly derived from the solute (lithium salt) in the non-aqueous electrolyte and the positive electrode active material. Therefore, a molar ratio mLi/mMe of an amount mLi of total lithium in the positive electrode and the negative electrode to an amount mMe of the metal Me in the positive electrode is, for example, 1.1 or less.

The transition metal may include nickel (Ni), and at least one element selected from the group consisting of cobalt (Co), manganese (Mn), iron (Fe), copper (Cu), chromium (Cr), titanium (Ti), niobium (Nb), zirconium (Zr), vanadium (V), tantalum (Ta), tungsten (W), and molybdenum (Mo).

The metal Me may include a metal other than transition metals. The metal other than transition metals may include at least one selected from the group consisting of aluminum (Al), magnesium (Mg), calcium (Ca), strontium (Sr), zinc (Zn), and silicon (Si). The composite oxide may further contain boron (B) or the like, in addition to the metal.

In view of achieving a higher capacity, the composite oxide preferably has a layered rock-salt type crystal structure, in which the metal Me other than lithium preferably at least includes nickel as a transition metal, and an atomic ratio Ni/Me of Ni to the metal Me may be 0.65 or more. When using a nickel-based composite oxide in which the Ni/Me is 0.65 or more, an initial charge-discharge efficiency is lower than when using lithium cobaltate, and the lithium metal deposited on the negative electrode current collector (mainly, the massive Li deposited in the early stage of charging) tends to remain thereon during discharge. When its amount is large, the remaining lithium metal can exhibit a similar effect to that of the massive Li allowed to continue to remain by the charging to the discharge rate of 20% or more and 80% or less and that of the massive Li allowed to deposit on the negative electrode current collector by the above preliminary charging. In the composite oxide, the atomic ratio Ni/Me of Ni to the metal Me is preferably 0.65 or more and less than 1, more preferably 0.7 or more and less than 1, and further more preferably 0.8 or more and less than 1.

In view of achieving a higher capacity and improving the output characteristics, in particular, the metal Me preferably includes Ni and at least one selected from the group consisting of Co, Mn and Al, and more preferably includes Ni, Co, and Mn and/or Al. When the metal Me includes Co, during charge and discharge, the phase transition of the composite oxide containing Li and Ni can be suppressed, the stability of the crystal structure can be improved, and the cycle characteristics tends to be improved. When the metal Me includes Mn and/or Al, the thermal stability can be improved.

The composite oxide may have a composition represented by a general formula (1): LiₐNi_{b}M_{1-b}O₂, where 0.9 ≤ a ≤ 1.2, and 0.65 ≤ b ≤ 1, and M is at least one element selected from the group consisting of Co, Mn, Al, Ti, Fe, Nb, B, Mg, Ca, Sr, Zr, and W. The ratio of Ni occupying the metals other than Li is large, and the massive Li tends to continue to remain during discharge. Furthermore, in this case, a higher capacity can be easily achieved, and the effects produced by Ni and the effect produced by the element M can be obtained in a well-balanced manner.

The composite oxide may have a composition represented by a general formula (2): LiₐNi_{1-y-z}Co_{y}Al_{z}O₂, where 0.9 ≤ a ≤ 1.2, 0 < y ≤ 0.2, 0 < z ≤ 0.05, and y + z ≤ 0.2. When y representing the composition ratio of Co is greater than 0 and 0.2 or less, high capacity and high output tends to be maintained, and the stability of the crystal structure during charge and discharge tends to be improved. When z representing the composition ratio of Al is greater than 0 and 0.05 or less, high capacity and high output tends to be maintained, and the thermal stability tends to be improved. In the formula, (1-y-z) representing the composition ratio of Ni satisfies 0.8 or greater and less than 1. In this case, the ratio of Ni occupying the metals other than Li is large, and the deposition form of Li is likely to be controlled. Also, in this case, a higher capacity is likely to be achieved, and the effects produced by Ni and the effect produced by Co and Al can be obtained in a well-balanced manner.

As the positive electrode active material, other than the above composite oxide, for example, a transition metal fluoride, a polyanion, a fluorinated polyanion, a transition metal sulfide, or the like may be used.

The positive electrode includes, for example, a positive electrode current collector and a positive electrode mixture layer supported on the positive electrode current collector. The positive electrode mixture layer contains, for example, a positive electrode active material, a conductive agent, and a binder. The positive electrode mixture layer may be formed on one surface or both surfaces of the positive electrode current collector. The positive electrode can be obtained by, for example, applying a positive electrode mixture slurry containing a positive electrode active material, a conductive agent, and a binder onto a surface of the positive electrode current collector, drying the applied film, and then rolling.

The conductive agent is, for example, a carbon material. Examples of the carbon material include carbon black, acetylene black, Ketjen black, carbon nanotubes, and graphite.

Examples of the binder include a fluorocarbon resin, polyacrylonitrile, a polyimide resin, an acrylic resin, a polyolefin resin, and a rubbery polymer. Examples of the fluorocarbon resin include polytetrafluoroethylene, and polyvinylidene fluoride.

The positive electrode current collector is an electrically conductive sheet. The conductive sheet may be in the form of a foil, film, and the like. The surface of the positive electrode current collector may be coated with a carbon material. The positive electrode current collector may have any thickness; the thickness is, for example, 5 µm or more and 300 µm or less.

The positive electrode current collector (conductive sheet) may be made of, for example, a metal material including Al, Ti, Fe, and the like. The metal material may be Al, an Al alloy, Ti, a Ti alloy, a Fe alloy, and the like. The Fe alloy may be stainless steel (SUS).

### [Separator]

A separator may be disposed between the positive electrode and the negative electrode. The separator is a porous sheet having ion permeability and electrically insulating properties. The porous sheet may be in the form of, for example, a microporous thin film, a woven fabric, and a nonwoven fabric. The separator is made of any material, and may be a polymer material. Examples of the polymer material include an olefinic resin, a polyamide resin, and a cellulose. Examples of the olefinic resin include polyethylene, polypropylene, and an ethylene-propylene copolymer. The separator may include an additive, if necessary. The additive is, for example, an inorganic filler.

### [Non-aqueous electrolyte]

The non-aqueous electrolyte having lithium ion conductivity includes, for example, a non-aqueous solvent, and lithium ions and anions dissolved in the non-aqueous solvent. The non-aqueous electrolyte may be liquid, and may be gel.

The liquid non-aqueous electrolyte can be prepared by dissolving a lithium salt in the non-aqueous solvent. When the lithium salt is dissolved in the non-aqueous solvent, lithium ions and anions are produced.

The gel non-aqueous electrolyte includes a lithium salt and a matrix polymer, or includes a lithium salt, a non-aqueous solvent, and a matrix polymer. The matrix polymer is, for example, a polymer material that is gelled by absorbing the non-aqueous solvent. Examples of the polymer material include a fluorocarbon resin, an acrylic resin, and a polyether resin.

The lithium salt or anions may be any known one that is utilized for a non-aqueous electrolyte in a lithium secondary battery. Specific examples thereof include: BF₄⁻, ClO₄⁻, PF₆⁻, CF₃SO₃⁻, CF₃CO₂⁻, imide anions, and an oxalate complex anion. Examples of the imide anions include N(SO₂F)₂⁻, N(SO₂CF₃)₂⁻, N(CₘF₂ₘ₊₁SO₂)ₓ(CₙF₂₊₁SO₂)_{y}⁻, where m and n are independently 0 or an integer of 1 or greater, x and y are independently 0, 1 or 2, and x+y = 2. The oxalate complex anion may contain boron and/or phosphorus. Examples of the oxalate complex anion include bis(oxalate)borate anion: B(C₂O₄)₂⁻, and difluoro(oxalate)borate anion: BF₂(C₂O₄)⁻, PF₄(C₂O₄)⁻, and PF₂(C₂O₄)₂⁻. The non-aqueous electrolyte may include one of these anions, or two or more kinds thereof.

In view of suppressing the deposition of lithium metal in a dendritic form, the non-aqueous electrolyte preferably includes at least an oxalate complex anion. In particular, difluoro(oxalate)borate anion is more preferred. Due to the interaction between the oxalate complex anion and lithium, a lithium metal is more likely to deposit uniformly in a massive form (particulate form). Therefore, a local deposition of lithium metal tends to be suppressed. The oxalate complex anion may be used in combination with another anion. The other anion may be, for example, PF₆⁻ and/or imide anions, such as N(SO₂F)₂⁻.

Examples of the non-aqueous solvent include esters, ethers, nitriles, amides, and halogen substituted derivatives of these. The non-aqueous electrolyte may contain one of these non-aqueous solvents, or two or more kinds thereof. Examples of the halogen substituted derivatives include fluorides.

The ester includes, for example, a carbonic acid ester, a carboxylic acid ester, and the like. Examples of a cyclic carbonic acid ester include ethylene carbonate and propylene carbonate. Examples of a chain carbonic acid ester include dimethyl carbonate (DMC), ethyl methyl carbonate (EMC), and diethyl carbonate. Examples of a cyclic carboxylic acid ester include γ-butyrolactone and γ-valerolactone. Examples of a chain carboxylic acid ester include ethyl acetate, methyl propionate, and methyl fluoropropionate.

The ether includes a cyclic ether and a chain ether. Examples of the cyclic ether include 1,3-dioxolane, 4-methyl-1,3-dioxolane, tetrahydrofuran, and 2-methyltetrahydrofuran. Examples of the chain ether include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The non-aqueous solvent may contain a small amount of components, such as vinylene carbonate (VC), fluoroethylene carbonate (FEC), and vinyl ethyl carbonate (VEC). In this case, a surface film derived from the above components is formed on the negative electrode, and the dendrite formation is suppressed by the surface film.

The concentration of the lithium salt in the non-aqueous electrolyte is, for example, 0.5 mol/L or more and 3.5 mol/L or less. The anion concentration in the non-aqueous electrolyte may be set to 0.5 mol/L or more and 3.5 mol/L or less. The oxalate complex anion concentration in the non-aqueous electrolyte may be set to 0.05 mol/L or more and 1 mol/L or less.

The non-aqueous electrolyte secondary battery, for example, has a structure in which an electrode group formed by winding the positive electrode and the negative electrode with the separator interposed therebetween is housed in an outer body, together with the non-aqueous electrolyte. The wound-type electrode group may be replaced with a different form of electrode group, for example, a stacked-type electrode group formed by stacking the positive electrode and the negative electrode with the separator interposed therebetween. The non-aqueous electrolyte secondary battery may be in any form, such as cylindrical type, prismatic type, coin type, button type, or laminate type.

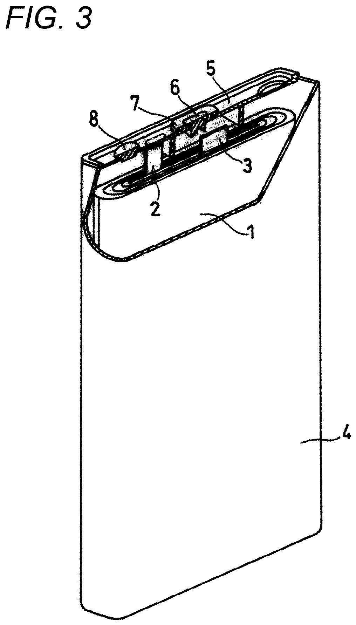

FIG. 3 is a partially cut-away schematic oblique view of a non-aqueous electrolyte secondary battery according to one embodiment of the present invention.

The battery includes a bottomed prismatic battery case 4, and an electrode group 1 and a non-aqueous electrolyte (not shown) housed in the battery case 4. The electrode group 1 has a long negative electrode, a long positive electrode, and a separator interposed between the positive electrode and the negative electrode and preventing them from directly contacting with each other. The electrode group 1 is formed by winding the negative electrode, the positive electrode, and the separator around a flat plate-like winding core, and then removing the winding core.

A negative electrode lead 3 is attached at its one end to the negative electrode current collector of the negative electrode, by means of welding or the like. The negative electrode lead 3 is electrically connected at its other end to a negative electrode terminal 6 disposed at a sealing plate 5, via a resin insulating plate (not shown). The negative electrode terminal 6 is insulated from the sealing plate 5 by a resin gasket 7. A positive electrode lead 2 is attached at its one end to the positive electrode current collector of the positive electrode, by means of welding or the like. The positive electrode lead 2 is electrically connected at its other end to the back side of the sealing plate 5, via the insulating plate. In short, the positive electrode lead 2 is electrically connected to the battery case 4 serving as a positive electrode terminal. The insulating plate serves to insulate the electrode group 1 from the sealing plate 5, as well as to insulate the negative electrode lead 3 from the battery case 4. The peripheral edge of the sealing plate 5 is fitted to the opening end of the battery case 4, and the fitting portion is laser-welded. In this way, the opening of the battery case 4 is sealed with the sealing plate 5. A non-aqueous electrolyte injection port provided in the sealing plate 5 is closed with a sealing stopper 8.

### [Examples]

The present invention will be specifically described below with reference to Examples. It should be noted, however, that the present invention is not limited to the following Examples.

### «Example 1»

### [Production of positive electrode]

A lithium-nickel composite oxide (LiNi_{0.9}Co_{0.05}Al_{0.05}O₂), acetylene black and polyvinylidene fluoride (PVdF) were mixed in a mass ratio of 95:2.5:2.5, to which N-methyl-2-pyrrolidone (NMP) was added, and then stirred, to prepare a positive electrode slurry. Next, the positive electrode slurry was applied onto a surface of an Al foil serving as a positive current collector, and the applied film was dried, and then rolled. Thus, a positive electrode with a positive electrode mixture layer (density: 3.6 g/cm³) formed on both surfaces of the Al foil was produced.

### [Production of negative electrode]

An electrolytic copper foil (thickness: 10 µm) was cut in a predetermined electrode size, to obtain a negative electrode current collector.

### [Preparation of non-aqueous electrolyte]

A non-aqueous electrolyte was prepared by dissolving a lithium salt in a mixed solvent. For the mixed solvent, a mixture of fluoroethylene carbonate (FEC), ethyl methyl carbonate (EMC), and dimethyl carbonate (DMC) in a volume ratio of FEC:EMC:DMC = 20:5:75 was used. For the lithium salt, LiPF₆, LiN(FSO₂)₂ (hereinafter, LiFSI), and LiBF₂(C₂O₄) (hereinafter, LiFOB) were used in combination. The concentration of LiPF₆ in the non-aqueous electrolyte was set to 0.5 mol/L. The concentration of LiFSI in the non-aqueous electrolyte was set to 0.5 mol/L. The content of LiFOB in the non-aqueous electrolyte was set to 1 mass%.

### [Assembly of battery]

A positive electrode lead made of Al was attached to the positive electrode obtained above, and a negative electrode lead made of Ni was attached to the negative electrode obtained above. In an inert gas atmosphere, the positive and negative electrodes were spirally wound, with a polyethylene thin film (separator) interposed therebetween, to prepare a wound electrode group. The electrode group was housed in a bag-shaped outer body formed of a laminated sheet having an Al layer, into which the non-aqueous electrolyte was injected, and then, the outer body was sealed. A non-aqueous electrolyte secondary battery was thus fabricated. When the electrode group was housed in the outer body, part of the positive electrode lead and part of the negative electrode lead were exposed outside from the outer body.

The lithium contained in the electrode group was all derived from the positive electrode, and the molar ratio mLi/mMe of the amount mLi of total lithium in the positive electrode and the negative electrode to the amount mMe of the metal Me (here, Ni, Co and Al) in the positive electrode was 0.8.

### [Preliminary charging and discharging]

Using the obtained battery, in a 25 °C environment, the following preliminary charging and discharging were performed.

### (Preliminary charging)

A constant-current charging was performed at a current I₀ of 0.05 C (0.5 mA/cm²) until the voltage reached 4.1 V (to the charge rate 100%).

### (Preliminary discharging)

After the rest for 10 minutes, a constant-current discharging was performed at 0.6 C (6.0 mA/cm²) until the voltage reached 3.75 V (to the discharge rate 50%).

### [Charge-discharge cycle test]

Using the battery after the preliminary charging and discharging, in a 25 °C environment, the following charge-discharge cycle test was performed.

### (Charging)

First, the following first and second steps of constant-current charging were performed.

First step: constant-current charging at a first current I₁ of 0.05 C (0.5 mA/cm²) from the charge rate 50% to the charge rate 57.5%.

Second step: constant-current charging at a second current I₂ of 0.2 C (2.0 mA/cm²) from the charge rate 57.5% to the charge rate 100%.

The ending of the first step was controlled by the charge time. The charge time (hr) was set to a time calculated by (1/I)·(X/100), given that the amount of electricity corresponding to a charge rate X (%) is charged at a current value I (C). The ending of the second step was controlled by the voltage. Specifically, in the second step, a constant-current charging was performed until the voltage reached 4.1 V, at which the charge rate is estimated as 100%.

Next, after the above constant-current charging, a constant-voltage charging was performed at a voltage of 4.1 V until the current reached 0.02 C.

### (Discharging)

After the rest for 10 minutes, a constant-current discharging was performed at 0.6 C (6.0 mA/cm²) until the voltage reached 3.75 V (to the discharge rate 50%).

### [Evaluation]

With the above charging and discharging taken as one cycle, 100 cycles were performed in total. The ratio of the discharge capacity at the 100th cycle to the discharge capacity at the 1st cycle was determined as a capacity retention ratio.

### «Example 2»

The non-aqueous electrolyte secondary battery as used in Example 1 was used. Preliminary charging and discharging were performed in the same manner as in Example 1, except that, in the preliminary discharging, the constant-current discharging was performed at 0.6 C (6.0 mA/cm²) until the voltage reached 3.6 V (to the discharge rate 75%). In the first step of the constant-current charging step in the charge-discharge cycle test, the constant-current charging was performed at the first current I₁ of 0.05 C (0.5 mA/cm²) from the charge rate 25% to 36.25%. In the second step, the constant-current charging was performed at the second current I₂ of 0.2 C (2.0 mA/cm²) from the charge rate 36.25% to 100%. In the discharging step, the constant-current discharging was performed at 0.6 C (6.0 mA/cm²) until the voltage reached 3.6 V (discharge rate 75%). Except for the above, the charge-discharge cycle test was performed in the same manner as in Example 1, and evaluated.

### «Comparative Examples 1 and 2»

The non-aqueous electrolyte secondary battery as used in Example 1 was used. The preliminary charging and discharging were performed in the same manner as in Example 1. The charge-discharge cycle test was performed in the same manner as in Example 1, except that in the constant-current charging step, the constant-current charging was performed at 0.4 C (4.0 mA/cm²) until the voltage reached 4.1 V (to the charge rate 100%), and the end-of-discharge voltage was set as shown in Table 1, and evaluated. When the end-of-discharge voltage of Comparative Example 3 is 3.0 V, the discharging is performed to the discharge rate 100%.

The evaluation results of Examples 1 and 2 and Comparative Examples 1 and 2 are shown in Table 1.

In Examples 1 and 2, the capacity retention ratio was high, as compared to in Comparative Examples 1 and 2. In Example 1, a higher capacity retention ratio was obtained.

In Comparative Example 1, the charging current density in the early stage of charging was as large as 4.0 mA/cm². Dendrites were abundantly formed on the negative electrode current collector, the isolation of Li proceeded, and the cycle characteristics were deteriorated. In Comparative Example 2, the charging current density in the early stage of charging was as large as 4.0 mA/cm², the end-of-discharge voltage was low, and the discharging was performed to the discharge rate 100%. The cycle characteristics were significantly deteriorated.

**[Table 1]**

| | Preliminary charging and discharging | Preliminary charge current I₀ | Constant-current charging step | | Discharging step | | Evaluation |
|---|---|---|---|---|---|---|---|
| | | | First step First current I₁ | Second step Second current I₂ | End-of-discharge voltage (V) | Discharge rate at the end of discharge (%) | Capacity retention ratio at 100th cycle (%) |
| Ex. 1 | With | 0.05 C | 0.05 C | 0.2 C | 3.75 | 50 | 96.1 |
| Ex. 2 | With | 0.05 C | 0.05C | 0.2 C | 3.60 | 75 | 82.2 |
| Com. Ex. 1 | With | 0.05 C | (Constant-current charging at 0.4 C to 4.1 V) | | 3.60 | 75 | 61.2 |
| Com. Ex. 2 | With | 0.05 C | (Constant-current charging at 0.4 C to 4.1 V) | | 3.00 | 100 | 54.9 |

### «Example 3»

The non-aqueous electrolyte secondary battery as used in Example 1 was used. The preliminary charging and discharging were performed in the same manner as in Example 1, except that the current I₀ in the preliminary charging was set to 0.02 C (0.2 mA/cm²), and the charge-discharge cycle test was performed, and evaluated.

### «Example 4»

The non-aqueous electrolyte secondary battery as used in Example 1 was used. The preliminary charging and discharging were not performed. In the first step in the first cycle of the charge-discharge cycle test, the constant-current charging was performed at the first current I₁ of 0.05 C (0.5 mA/cm²) from the charge rate 0% to 15%. In the second step, the constant-current charging was performed at the second current I₂ of 0.2 C (2.0 mA/cm²) from the charge rate 15% to 100%. In the first step in the second and subsequent cycles, the constant-current charging was performed at the first current I₁ of 0.05 C (0.5 mA/cm²) from the charge rate 50% to 57.5%. In the second step, the constant-current charging was performed at the second current I₂ of 0.2 C (2.0 mA/cm²) from the charge rate 57.5% to 100%. Except for the above, the charge-discharge cycle test was performed in the same manner as in Example 1, and evaluated.

The evaluation results of Examples 3 and 4 are shown in Table 2. Table 2 also shows the evaluation results of Example 1.

In all Examples 1, 3 and 4, a high capacity retention ratio was obtained. In Examples 1 and 3, in which the preliminary charging and discharging were performed, a higher capacity retention ratio was obtained. In Example 3, in which the charge rate in the preliminary charging was 0.02 C (0.2 mA/cm²), a further higher capacity retention ratio was obtained.

**[Table 2]**

| | Preliminary charging and discharging | Preliminary charge current I₀ | Constant-current charging step | | Discharging step | | Evaluation |
|---|---|---|---|---|---|---|---|
| | | | First step First current I₁ | Second step Second current I₂ | End-of-discharge voltage (V) | Discharge rate at the end of discharge (%) | Capacity retention ratio at 100th cycle (%) |
| Ex. 1 | With | 0.05 C | 0.05 C | 0.2 C | 3.75 | 50 | 96.1 |
| Ex. 3 | With | 0.02 C | 0.05C | 0.2 C | 3.75 | 50 | 96.4 |
| Ex. 4 | Without | - | 0.05 C | 0.2 C | 3.75 | 50 | 95.8 |

### [Industrial Applicability]

The charging and discharging method for a non-aqueous electrolyte secondary battery according to the present invention is suitably applicable for a non-aqueous electrolyte secondary battery of a type in which a lithium metal deposits on a negative electrode current collector during charge and the lithium metal dissolves during discharge.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Reference Signs List]

1: electrode group, 2: positive electrode lead, 3: negative electrode lead, 4: battery case, 5: sealing plate, 6: negative electrode terminal, 7: gasket, 8: sealing stopper, 11: non-aqueous electrolyte secondary battery, 12: charging and discharging apparatus, 13: external power source, 14: external load, 15: charging control unit, 16: discharging control unit, 17: voltage detection unit, 18: current detection unit

## Claims

1. A charging and discharging method for a non-aqueous electrolyte secondary battery, the battery including
a positive electrode, a negative electrode including a negative electrode current collector, and a non-aqueous electrolyte, in which a lithium metal deposits on the negative electrode during charge, and the lithium metal dissolves in the non-aqueous electrolyte during discharge, the method comprising:
a charging step; and a discharging step performed after the charging step, wherein
the charging step includes a first step of performing a constant-current charging at a first current I₁ having a current density of 1.0 mA/cm² or less, and a second step of performing a constant-current charging at a second current I₂ larger that the first current I₁, after the first step, and
in the discharging step, an amount of electricity corresponding to 20% or more and 80% or less of a full charge amount is discharged.

2. The charging and discharging method for a non-aqueous electrolyte secondary battery according to claim 1, wherein in the first step, the constant-current charging is performed at the first current I₁ of 0.1 C or less.

3. The charging and discharging method for a non-aqueous electrolyte secondary battery according to claim 1 or 2, wherein in the first step, an amount of electricity corresponding to 5% or more and 15% or less of a total amount of electricity to be charged in the charging step is charged.

4. The charging and discharging method for a non-aqueous electrolyte secondary battery according to claim 1 or 2, wherein
the charging step includes a third step of performing a constant-current charging at a third current I₃, after the second step,
the second current I₂ is larger than the first current I₁, and has a current density of 4.0 mA/cm² or less, and
the third current I₃ is larger than the second current I₂, and has a current density of 4.0 mA/cm² or more.

5. The charging and discharging method for a non-aqueous electrolyte secondary battery according to claim 4, wherein
in the second step, the constant-current charging is performed at the second current I₂ being larger than the first current I₁, and 0.4 C or less, and
in the third step, the constant-current charging is performed at the third current I₃ being larger than the second current I₂, and 0.4 C or more.

6. The charging and discharging method for a non-aqueous electrolyte secondary battery according to claim 4 or 5, wherein
in the first step, the constant-current charging is performed such that an amount of charged electricity in the first step becomes 15% or less of a total amount of electricity to be charged in the charging step, and
in the second step, the constant-current charging is performed such that a summed amount of charged electricity in the first step and the second step becomes 50% or less of the total amount of electricity to be charged in the charging step.

7. The charging and discharging method for a non-aqueous electrolyte secondary battery according to any one of claims 1 to 6, further comprising a preliminary charging step of performing a constant-current charging at a current I₀ having a current density of 0.5 mA/cm² or less, before the charging step performed first time.

8. The charging and discharging method for a non-aqueous electrolyte secondary battery according to claim 7, wherein in the preliminary charging step, the constant-current charging is performed at the current I₀ of 0.05 C or less.

9. The charging and discharging method for a non-aqueous electrolyte secondary battery according to any one of claims 1 to 8, wherein
the positive electrode has a layered rock-salt type crystal structure, and includes a composite oxide containing lithium and nickel, and
the composite oxide is represented by a general formula (1): LiₐNi_{b}M_{1-b}O₂, and in the general formula (1), 0.9 ≤ a ≤ 1.2 and 0.65 ≤ b ≤ 1 are satisfied, and M is at least one element selected from the group consisting of Co, Mn, Al, Ti, Fe, Nb, B, Mg, Ca, Sr, Zr and W.

10. The charging and discharging method for a non-aqueous electrolyte secondary battery according to any one of claims 1 to 9, wherein the negative electrode current collector is a copper foil or a copper alloy foil.

11. A charging and discharging system for a non-aqueous electrolyte secondary battery, comprising:
a non-aqueous electrolyte secondary battery; and a charging and discharging apparatus, wherein
the non-aqueous electrolyte secondary battery includes a positive electrode, a negative electrode including a negative electrode current collector, and a non-aqueous electrolyte, in which a lithium metal deposits on the negative electrode during charge, and the lithium metal dissolves in the non-aqueous electrolyte during discharge, and
the charging and discharging apparatus includes a charging control unit, and a discharging control unit,
the charging control unit controls charging such that a first constant-current charging is performed at a first current I₁ having a current density of 1.0 mA/cm² or less, and a second constant-current charging is performed after the first constant-current charging, at a second current I₂ being larger than the first current I₁, and
the discharging control unit controls discharging such that an amount of electricity corresponding to 20% or more and 80% or less of a full charge amount is discharged.

12. The charging and discharging system for a non-aqueous electrolyte secondary battery according to claim 11, wherein in the first constant-current charging, an amount of electricity corresponding to 5% or more and 15% or less of a total amount of electricity to be charged is charged.

13. The charging and discharging system for a non-aqueous electrolyte secondary battery according to claim 11, wherein
the charging control unit controls charging such that a third constant-current charging is performed at a third current I₃, after the second constant-current charging,
the second current I₂ is larger than the first current I₁, and has a current density of 4.0 mA/cm² or less, and
the third current I₃ is larger than the second current I₂, and has a current density of 4.0 mA/cm² or more.

14. The charging and discharging system for a non-aqueous electrolyte secondary battery according to claim 13, wherein
the charging control unit controls charging such that when an amount of charged electricity reaches a first threshold value in the first constant-current charging, the first constant-current charging is ended to start the second constant-current charging, and when the amount of charged electricity reaches a second threshold value in the second constant-current charging, the second constant-current charging is ended to start the third constant-current charging,
the first threshold value is an amount of charged electricity corresponding to 15% or less of a total amount of electricity to be charged, and
the second threshold value is an amount of charged electricity corresponding to 50% or less of the total amount of electricity to be charged.

15. The charging and discharging system for a non-aqueous electrolyte secondary battery according to any one of claims 11 to 14, wherein the charging control unit controls charging such that a constant-current charging is performed at a current I₀ having a current density of 0.5 mA/cm² or less, before the first constant-current charging performed first time.
